# EUROPEAN PATENT APPLICATION

(11) **EP 4 641 088 A1**
(43) Date of publication of application: **29.10.2025**
(21) Application number: 25166157.5
(22) Date of filing: 25.03.2025
(51) Int. Cl.: F23R 3/28, F23R 3/36

(54) **FUEL INJECTOR FOR A TURBINE ENGINE**

(30) Priority: 22.04.2024 US 202418642208
(71) Applicant: General Electric Company, Evendale, Ohio 45215 (US)
(72) Inventor: KNOLLE, Bernard Gustav, Evendale 45215 (US); VENTURATO, Marco, Evendale 45215 (US); SHEALY, James, Evendale 45215 (US); ROYER, Brian, Evendale 45215 (US); GIRIDHARAN, Manampathy, Evendale 45215 (US)
(74) Representative: Openshaw & Co.

(57) **Abstract**

A gas turbine engine (10) includes a compressor section (22), combustion section (28), and turbine section (32) is serial flow arrangement. A fuel injector (102) supplies a mixture of fuel and air for combustion within the combustor section (28). A first annular structure (136) defines a central passage (140) and a longitudinal axis (144) within the fuel injector (102). A second annular structure (138) is spaced from and in annular arrangement about the first annular structure (136) to define an outer passage (142) in annular arrangement between the first annular structure (136) and the second annular structure (138).

## Description

### TECHNICAL FIELD

The present subject matter relates generally to a fuel injector for supplying a mixture of fuel and air to a turbine engine, and more specifically, for supplying to a combustor for combustion to drive the turbine engine.

### BACKGROUND

Turbine engines typically includes a fan and a turbomachine. The turbomachine generally includes an inlet, one or more compressors, a combustor, and at least one turbine. The compressors compress air which is channeled to the combustor where it is mixed with fuel. The mixture is then ignited for generating hot combustion gases. The combustion gases are channeled to the turbine(s) which extracts energy from the combustion gases for powering the compressor(s), as well as for producing useful work to propel an aircraft in flight or to power a load, such as an electrical generator.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine including a combustion section, in accordance with an aspect of the present disclosure.
FIG. 2 is a schematic, cross-sectional view of a combustor with a fuel assembly utilized in the combustion section of FIG. 1, in accordance with an aspect of the present disclosure.
FIG. 3 is a view of a deflector wall of the combustor of FIG. 2, looking in a forward direction and taken along section III-III, having a set of fuel injectors in annular arrangement, in accordance with an aspect of the present disclosure.
FIG. 4 is an isometric section view of one fuel injector of the set of fuel injectors of FIG. 3 taken along section IV-IV of FIG. 3, in accordance with an aspect of the present disclosure.
FIG. 5 is a section view of a fuel injector having a central passage and a set of outer passages having an angled arrangement that is angled toward the central passage, in accordance with an aspect of the present disclosure.
FIG. 6 is a front view of a fuel injector with a central passage, an annular outer passage, and an annular intermediate passage between the central passage and the annular outer passage, in accordance with an aspect of the present disclosure.
FIG. 7 is a sectional view of the fuel injector of FIG. 6 taken along section VII-VII, in accordance with an aspect of the present disclosure.
FIG. 8 is a front view of a fuel injector with a central passage, an annular outer passage, and a set of intermediate passages in annular arrangement about the central passage, in accordance with an aspect of the present disclosure.
FIG. 9 is a sectional view of the fuel injector of FIG. 8 taken along section IX-IX, in accordance with an aspect of the present disclosure.
FIG. 10 is an isometric view of a fuel injector having central passage with an outlet spaced from an aft side by an angled connecting wall, in accordance with an aspect of the present disclosure.
FIG. 11 is an isometric view of a fuel injector having central passage and a set of outer passages in annular arrangement about the central passage, in accordance with an aspect of the present disclosure.
FIG. 12 is a sectional view of the fuel injector of FIG. 11 taken along section XII-XII, with the section taken through one outer passage of the set of outer passages, in accordance with an aspect of the present disclosure.
FIG. 13 is a sectional view of the fuel injector of FIG. 11 taken along section XIII-XIII, with the section taken between adjacent outer passages of the set of outer passages, in accordance with an aspect of the present disclosure.
FIG. 14 is an isometric section view of a fuel injector having a central passage and a set of outer passages in annular arrangement about the central passage angled toward the central passage, in accordance with an aspect of the present disclosure.
FIG. 15 is a sectional view of a fuel injector with a central passage and an annular outer passage having no features on an outer diameter of the outer passage, in accordance with an aspect of the present disclosure.
FIG. 16 is a front view of a fuel injector including an inner passage having an "s" shape and an outer passage in annular arrangement about inner passage, in accordance with an aspect of the present disclosure.
FIG. 17 is a front view of a fuel injector including an inner passage having a spiral shape and an outer passage in annular arrangement about the inner passage, in accordance with an aspect of the present disclosure.
FIG. 18 is a front view of a fuel injector including an inner passage having a linear shape and an outer passage in annular arrangement about inner passage, in accordance with an aspect of the present disclosure.
FIG. 19 is a front view of a fuel injector including an inner passage having a star shape and an outer passage in annular arrangement about inner passage, in accordance with an aspect of the present disclosure.

### DETAILED DESCRIPTION

Aspects of the disclosure herein are directed to a fuel injector located within an engine, and more specifically, to a fuel injector for supplying a fuel or fuel and air mixture to a combustor for combustion within a turbine engine. For purposes of illustration, the present disclosure will be described with respect to a fuel injector located within the combustor for a turbine engine. It will be understood, however, that aspects of the disclosure herein are not so limited and may have general applicability within an engine that combusts a fuel to drive the engine, as well as in non-aircraft applications or other turbine environments, such as other mobile applications and nonmobile industrial, commercial, and residential applications.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first," "second," "third," "fourth," and "fifth" may be used interchangeably to distinguish one component from another and are not intended to signify location or importance of the individual components.

The terms "forward" and "aft" refer to relative positions within a turbine engine or component thereof and refer to the normal operational attitude of the turbine engine. For example, with regard to a gas turbine engine, forward refers to a position closer to an engine inlet and aft refers to a position closer to an engine nozzle or exhaust or can be relative to a local flow direction through the turbine engine. As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid, or multi-phase. The term "fluid communication" means that a fluid is capable of making the connection or passing among the areas specified.

Additionally, as used herein, the terms "radial" or "radially" refer to a direction away from a common center. For example, in the overall context of a turbine engine, radial refers to a direction along a ray extending between a center longitudinal axis of the engine and an outer engine circumference.

In certain exemplary embodiments of the present disclosure, a turbine engine defining a centerline and a circumferential direction is provided. The turbine engine may generally include a turbomachine and a rotor assembly. The rotor assembly may be driven by the turbomachine. The turbomachine, the rotor assembly, or both may define an annular flow path relative to the centerline of the turbine engine.

All directional references (e.g., radial, axial, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order, and relative sizes reflected in the drawings attached hereto can vary.

The singular forms "a," "an," and "the" include plural references unless the context clearly dictates otherwise. Furthermore, as used herein, the term "set" or a "set" of elements can be any number of elements, including only one.

Reference will now be made in detail to the architecture, and in particular the fuel injector, located within a combustion section of a turbine engine, one or more examples of which are illustrated in the accompanying drawings. The detailed description uses numerical and letter designations to refer to features in the drawings.

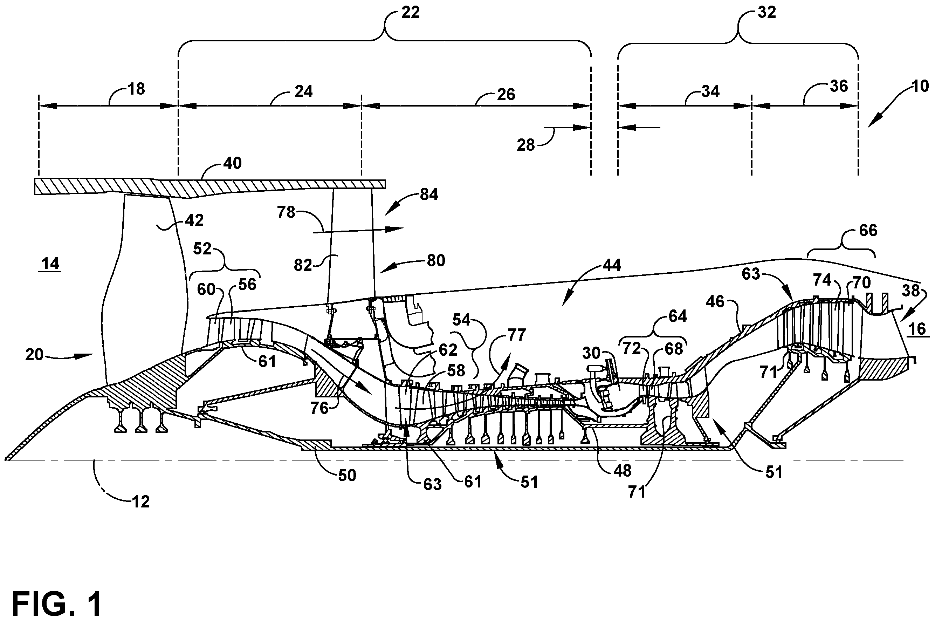

FIG. 1 is a schematic cross-sectional diagram of a gas turbine engine 10 for an aircraft. The gas turbine engine 10 has a longitudinally extending axis or centerline 12 extending from a forward 14 to an aft 16. The gas turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including an HP turbine 34, and an LP turbine 36, and an exhaust section 38. The turbine engine 10, as illustrated, is a turbofan engine. It will be appreciated, however, that the turbine engine 10 can be any suitable engine such as, but no limited to, a turboprop engine, a turboshaft engine, a ducted turbofan engine, an unducted engine, or an open rotor turbine engine.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the gas turbine engine 10, which generates combustion gases. The core 44 is surrounded by a core casing 46, which can be coupled with the fan casing 40.

An HP shaft or spool 48 disposed coaxially about the centerline 12 of the gas turbine engine 10 drivingly connects the HP turbine 34 to the HP compressor 26. An LP shaft or spool 50 is disposed coaxially about the centerline 12 and positioned within the larger diameter annular HP spool 48. The LP shaft or spool 50 drivingly connects the LP turbine 36 to the LP compressor 24 and fan 20. The HP and LP spools 48, 50 are rotatable about the centerline 12 and couple to a plurality of rotatable elements, which can collectively define a rotor 51.

The LP compressor 24 and the HP compressor 26 respectively include a plurality of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage of the plurality of compressor stages 52, 54, multiple compressor blades 56, 58 can be provided in a ring and can extend radially outwardly relative to the centerline 12, from a blade platform to a blade tip, while the corresponding set of static compressor vanes 60, 62 are positioned upstream of and adjacent to the rotating compressor blades 56, 58. It is noted that the number of stages, blades, vanes, and compressor stages shown in FIG. 1 were selected for illustrative purposes only, and that other numbers are possible.

The compressor blades 56, 58 for a stage of the compressor can be mounted to a disk 61, which is mounted to the corresponding one of the HP and LP spools 48, 50, with each stage having its own disk 61. In an alternative, non-limiting example, the compressor blades 56, 58 may be part of a blisk, rather than being mounted to a disk. The set of static compressor vanes 60, 62 for a stage of the compressor can be mounted to the core casing 46 in a circumferential arrangement.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage of the plurality of turbine stages 64, 66, multiple turbine blades 68, 70 can be provided in an annular ring and can extend radially outwardly relative to the centerline 12, from a blade platform to a blade tip, while the corresponding set of static turbine vanes 72, 74 are positioned upstream of and adjacent to the rotating turbine blades 68, 70. It is noted that the number of stages, blades, vanes, and turbine stages shown in FIG. 1 were selected for illustrative purposes only, and that other numbers are possible.

The turbine blades 68, 70 for a stage of the turbine can be mounted to a disk 71, which is mounted to the corresponding one of the HP and LP spools 48, 50, with each stage having a dedicated disk 71. The set of static turbine vanes 72, 74 for a stage of the turbine can be mounted to the core casing 46 in a circumferential arrangement.

Complimentary to the rotor 51, the stationary portions of the gas turbine engine 10, such as the sets of static compressor and turbine vanes 60, 62, 72, 74 among the compressor and turbine sections 22, 32 are also referred to individually or collectively as a stator 63. As such, the stator 63 can refer to the combination of nonrotating elements throughout the gas turbine engine 10.

In operation, the airflow exiting the fan section 18 is split such that a portion of the airflow is channeled into the LP compressor 24 as a pressurized air 76. The pressurized air 76 passes to the HP compressor 26, which further pressurizes the air. The pressurized air 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is discharged from the gas turbine engine 10 via the exhaust section 38. The driving of the LP turbine 36 drives the LP spool 50 to rotate the fan 20 and the LP compressor 24.

A portion of the pressurized air 76 can be drawn from the compressor section 22 as a bleed airflow 77. The bleed airflow 77 can be drawn from the pressurized air 76 and provided to engine components requiring cooling. The temperature of pressurized air 76 entering and exiting the combustor 30 is significantly increased. As such, cooling provided by the bleed airflow 77 is supplied to downstream turbine components (e.g., the turbine blade 68) subjected to the heightened temperature environments.

A remaining portion of the airflow exiting the fan section 18 bypasses the LP compressor 24 and core 44 as a bypass airflow 78 and exits the gas turbine engine 10 through a stationary vane row. The stationary vane row can be an outlet guide vane assembly 80 comprising a plurality of airfoil guide vanes 82 at a fan exhaust side 84. More specifically, the plurality of airfoil guide vanes 82 can be arranged as a circumferential row of adjacent the fan section 18 to exert some directional control of the bypass airflow 78.

Some of the air supplied by the fan 20 can bypass the core 44 and be used for cooling of portions, especially hot portions, of the gas turbine engine 10, and/or used to cool or power other aspects of the aircraft upon which the gas turbine engine 10 is mounted. In the context of the gas turbine engine 10, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

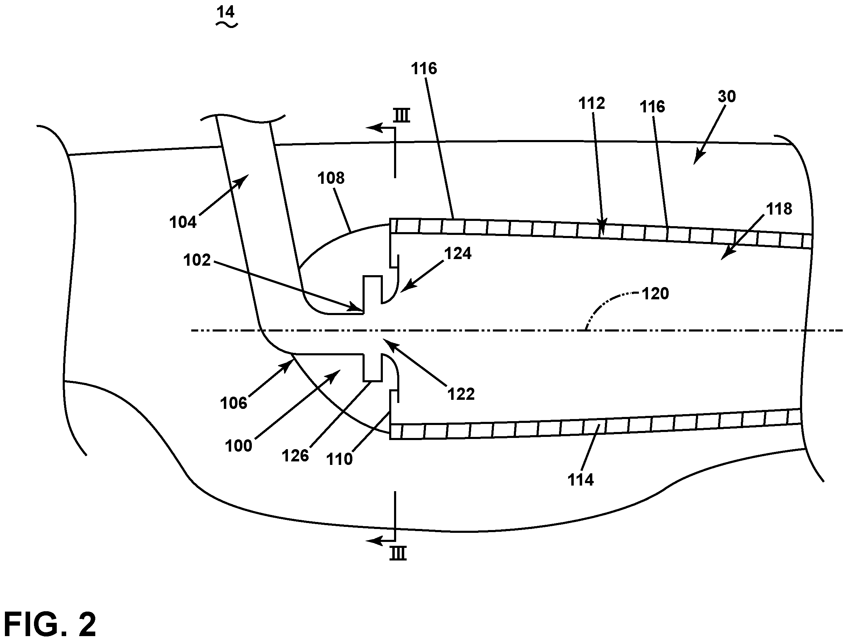

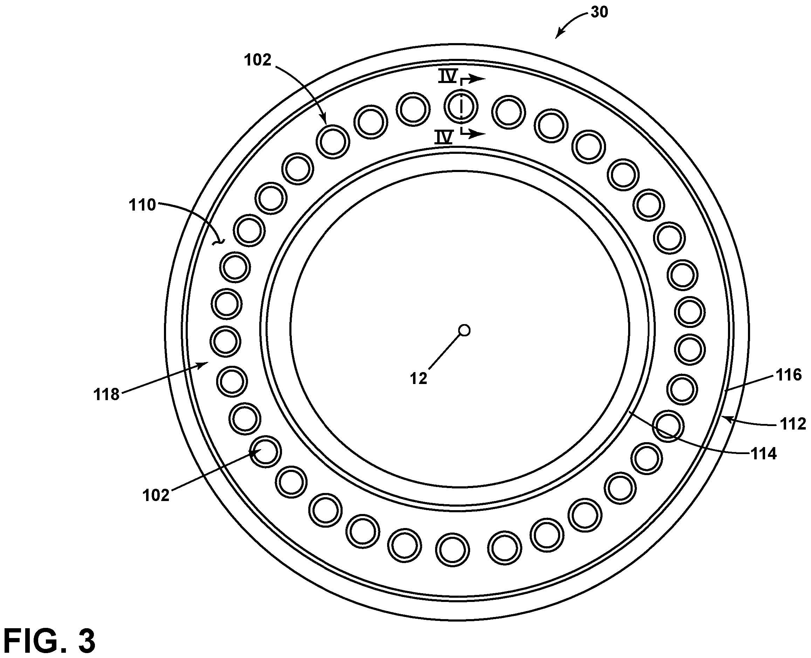

FIG. 2 depicts a schematic, cross-sectional view of the combustion section 28 of FIG. 1 including a fuel assembly 100 configured to provide fuel to the combustor 30. The fuel assembly 100 can include a fuel nozzle or fuel injector 102 coupled to a fuel supply 104. While only one fuel supply 104 is shown, multiple fuel supplies 104 can be provided (see FIG. 3, for example), and they can provide the same or different fuels, as well as multiple fuels, air, or fuel additives carried within the fuel supply 104. The fuel can include any suitable fuel, including liquid fuels, gaseous fuels, solid-state fuels, synthetic fuels, hydrocarbon fuel, hydrogen fuel, or a mixture of differing fuel types, in non-limiting examples. The fuel injector 102 can be mounted within a dome assembly 106 including a dome wall 108 and a deflector 110. A combustor liner 112 can be arranged as an inner liner 114 spaced from an outer liner 116, collectively defining a combustion chamber 118 with the dome assembly 106 or the deflector 110 thereof. A combustor axis 120 can be defined extending from the fuel injector 102 and can be defined equidistant between the inner liner 114 and the outer liner 116 or can be defined parallel to the centerline 12 (FIG. 1) in non-limiting examples.

The fuel supply 104 can extend through and interior of the dome assembly 106 to define a fuel outlet 122 facing the combustion chamber 118. It is contemplated that air can also be supplied or provided to the combustion chamber 118 by way of the fuel outlet 122. In this manner, the fuel outlet 122 can provide a fuel-air mixture to the combustion chamber 118. A flare cone 124 can be provided downstream of the fuel supply 104, while a fuel supply 104 without a flare cone is contemplated. A swirler 126 can also be provided at the fuel assembly 100 to swirl incoming air in proximity to fuel within or exiting the fuel supply 104 and provide a homogeneous mixture of air and fuel entering the combustion chamber 118. It is also contemplated that the swirler 126 can be integrated into the fuel injector 102.

FIG. 3 depicts a cross-sectional view of the combustor 30 taken along line III-III of FIG. 2, looking in a forward direction toward the deflector 110, and showing a full annular shape for the combustor 30. The combustor 30 has an annular arrangement, including an annular arrangement of multiple fuel injectors 102 disposed on the deflector 110. The multiple fuel injectors 102 can be arranged annularly about the centerline 12, for example. As may be appreciated, the combustion chamber 118 can be defined as an annular chamber within the combustor liner 112, arranged between annular arrangements for the inner liner 114 and the outer liner 116, which can be arranged concentric with respect to each other and arranged in an annular fashion about the centerline 12. It should be appreciated that the annular arrangement of fuel injectors 102 can be one or multiple fuel injectors, and one or more of the fuel injectors 102 can have similar or different characteristics. In some examples, multiple fuel injectors 102 can be positioned in a clustered arrangement, such as a single fuel injector or cup having multiple outlets forming the fuel injector 102. In additional non-limiting examples, the combustor 30 can have a can, can-annular, or annular arrangement depending on the type of engine in which the combustor 30 is located.

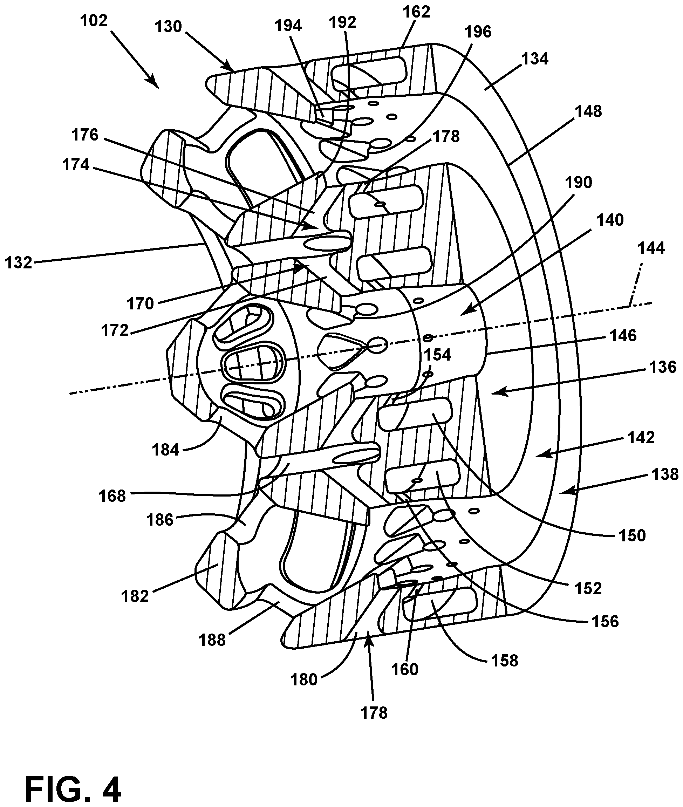

FIG. 4 illustrates a cross-sectional view of one fuel injector 102 of FIG. 3 taken along section IV-IV. A body 130 for the fuel injector 102 extends between a first side 132 and a second side 134, which can be a forward side and an aft side, respectively. An exterior surface 162 having an annular shape extends between the first side 132 and the second side 134. The body 130 includes a first annular structure 136 that surrounds a central passage 140 and a second annular structure 138 that is spaced from the first annular structure 136 by an outer passage 142. The outer passage 142 can be an annular passage, defined by the annular shape of the first and second annular structures 136, 138. A longitudinal axis 144 for the fuel injector 102 can be defined centrally within the central passage 140. The central passage 140 exhausts at a central passage outlet 146 at the second side 134 and the outer passage 142 exhausts at an outer passage outlet 148 at the second side 134.

A first fuel supply 150 and a second fuel supply 152 are provided in annular arrangement about the first annular structure 136, with the second fuel supply 152 positioned exterior of the first fuel supply 150 relative to the longitudinal axis 144. Each of the first and second fuel supplies 150, 152 can be provided as annular cavities, for example, while a set of discrete cavities in annular arrangement is contemplated. The first fuel supply 150 and the second fuel supply 152 can supply the same fuel, for example, being supplied with fuel from a common source fed to the first and second fuel supplies 150, 152, while it is contemplated that the first fuel supply 150 and the second fuel supply 152 can supply different fuels or fuel additives. A first set of fuel supply passages 154 are provided in the first annular structure 136 in annular arrangement about the central passage 140 fluidly coupling the first fuel supply 150 to the central passage 140. A second set of fuel supply passages 156 are provided in the first annular structure 136 in annular arrangement about the central passage 140 and fluidly coupling the second fuel supply 152 to the outer passage 142. A third fuel supply 158 and a third set of fuel supply passages 160 are provided in the second annular structure 138 in annular arrangement about the central passage 140 and fluidly coupling the third fuel supply 158 to the outer passage 142.

A cavity 168 extends into the first annular structure 136 from the first side 132 and can be in annular arrangement about the first annular structure 136. A first air supply 170 is provided in the first annular structure 136 as a first set of air supply passages 172 in annular arrangement about the first annular structure 136 fluidly coupling the first air supply 170 to the central passage 140. A second air supply 174 is provided in the first annular structure 136 as a second set of air supply passages 176 in annular arrangement about the first annular structure 136 and positioned exterior of the first set of air supply passages 172. The second set of air supply passages 176 fluidly couple the second air supply 174 to the outer passage 142. A third air supply 178 is provided in the second annular structure 138 as a third set of air supply passages 180 in annular arrangement about the second annular structure 138 and fluidly couples the third air supply 178 to the outer passage 142 through the exterior surface 162. The first, second, and third air supplies 170, 174, 178 are positioned forward of the first, second and third fuel supplies 150, 152, 158 relative to a direction along the longitudinal axis 144, while any positioning for any of the first, second, and third fuel supplies 150, 152, 158 or the first, second, and third air supplies 170, 174, 178 or their related passages is contemplated. The first and second air supplies 170, 174 can receive a volume of air from the cavity 168, and the second air supply 174 can receive a volume of air from exterior of the second annular structure 138.

A forward wall 182 defines the first side 132 of the body 130 and connects the first annular structure 136 to the second annular structure 138. A first set of apertures 184 are provided in the first annular structure 136 in annular arrangement about the longitudinal axis 144. The first set of apertures 184 can position where the first annular structure 136 extends from the forward wall 182. The first set of apertures 184 exhaust to the central passage 140 through the first annular structure 136. A second set of apertures 186 are provided in the first annular structure 136 in annular arrangement about the longitudinal axis 144 and position exterior of the first set of apertures 184. The second set of apertures 186 exhaust to the outer passage 142 through the first annular structure 136. A third set of apertures 188 are provided in the second annular structure 138 in annular arrangement about the longitudinal axis 144 and exhaust to the outer passage 142. It is further contemplated that the first, second, and third sets of apertures 184, 186, 188 can be arranged in the forward wall 182, providing a supply of air through the forward wall 182 and exhausting into their respective central passage 140 or outer passage 142.

A first set of turbulators 190 extends into the central passage 140 from the first annular structure 136. The first set of turbulators 190 can terminate where the first set of air supply passages 172 exhaust to the central passage 140, while any positioning is contemplated. A second set of turbulators 192 are provided on the first annular structure 136 extending into the outer passage 142 and can terminate where the second set of air supply passages 176 exhaust to the outer passage 142. A third set of turbulators 194 are provided on the second annular structure 138 extending into the outer passage 142 and can terminate where third set of air supply passages 180 exhaust to the outer passage 142. In a non-limiting example, the first, second, and third sets of fuel supply passages 154, 156, 160 can be located on or forward of the first, second, and third sets of turbulators 190, 192, 194. The first, second, and third sets of turbulators 190, 192, 194 can have a ramped teardrop shape, defining a ramped geometry extending in the flow direction and having a teardrop shape with a point 196 of the tear drop arranged at the first, second, and third sets of air supply passages 172, 176, 180, respectively. In additional non-limiting examples, the first, second, and third sets of air supply passages 172, 176, 180 can be spaced from the first, second, and third sets of turbulators 190, 192, 194 or can exhaust on or through the first, second, and third sets of turbulators 190, 192, 194. Additional shapes for the first, second, and third sets of turbulators 190, 192, 194 are contemplated, including but not limited to vortex turbulators, wedge-type turbulators, ramp-type turbulators, single sided or double sided turbulators, splitter plate-type turbulators, dome-type turbulators, plough-type turbulators, scoop-type turbulators, vane-type turbulators, Wheeler-type turbulators, Kuethe or wave-element type turbulators, delta wing or delta-winglet turbulators, rectangular turbulators, square turbulators, conic turbulators, cylindrical or rod-type turbulators, rounded, spherical, or circular turbulators, vortex generators, or turbulators generating flows such as vortices, reverse vortices, transverse vortices, hairpin vortices, laminar flows, turbulent flows, helical flows, stream-wise flows, cross-stream flows, co-rotating flows, or counterrotating flows, or any combination thereof. Additionally, any size, number, orientation, or arrangement of turbulators is contemplated.

In a non-limiting example, a ratio of flow area to bluff body area can be greater than or equal to 0.01 and less than or equal to 10. The flow area can be defined as the total cross-sectional area for the central passage 140 and the outer passage 142 at the central passage outlet 146 and the outer passage outlet 148 defined perpendicular to the longitudinal axis 144. The bluff body area can be the cross-sectional area of the first annular structure 136 and the second annular structure 138 along the second side 134. That is, the ratio of flow area to bluff body area is the ratio of flow area to body area along the second side 134.

In another non-limiting example, a ratio of mixing length to exit diameter can be greater than zero and less than or equal to 200. The mixing length can be defined as a length of the central passage 140 taken along the longitudinal axis 144 from the first set of fuel supply passages 154 to the central passage outlet 146. In an alternate non-limiting example, the mixing length can be defined as a length for the outer passage 142 extending from the second set of fuel supply passages 156 and the third set of fuel supply passages 160 to the second side 134. Such a length for the outer passage 142 can be defined equidistant between the first annular structure 136 and the second annular structure 138 and can be the same among the central passage 140 and the outer passage 142, while different lengths are contemplated. Where such lengths are different, the mixing length can be defined as the average of the mixing lengths among the central passage 140 and the outer passage 142 or can be specific to each of the central and outer passages 140, 142. The exit diameter can be defined as the diameter for the flow area at the second side 134. More specifically, an exit diameter for the central passage 140 can be its diameter, while the exit diameter for the outer passage 142 can be the diameter for outer passage 142 at the second side 134 taken where the outer passage 142 terminates at the second annular structure 138, subtracting a diameter of the first annular structure 136. The diameter of the outer passage 142 and the thickness of the first annular structure 136 can both be defined perpendicular to the longitudinal axis 144 along the second side 134, for example.

In operation, a supply of air is provided to the combustor 30 (FIG. 1), which can be provided to the fuel injector 102 from the compressor section 22 (FIG. 1). A portion of the supply of air passes into the fuel injector 102 through the first, second, and third sets of apertures 184, 186, 188 at the first side 132. The portion of the supply of air provided through the first set of apertures 184 passes to the central passage 140, while the portion of the supply of air passing through the second and third set of apertures 184, 186 passes to the outer passage 142. The supply of air provided by the first, second, and third sets of apertures 184, 186, 188 is then turbulated by the first, second, and third sets of turbulators 190, 192, 194.

A portion of the supply of air provided to the fuel injector 102 can pass to the first air supply 170 within the first annular structure 136 through the forward wall 182 and into the cavity 168. The supply of air is provided to the first and second air supplies 170, 174 from the cavity 168 and exhausts through the first set of air supply passages 172 to the central passage 140 and through the second set of air supply passages 176 to the outer passage 142. A portion of the supply of air provided to the fuel injector 102 can bypass the forward wall 182 to pass along the exterior surface 162, where the supply of air can pass through the third set of air supply passages 180 through the second annular structure 138 to the outer passage 142.

A supply of fuel can be provided to each of the first, second, and third fuel supplies 150, 152, 158. Supply of the fuels can be provided through the body 130, for example, such as through the forward wall 182. Each of the first, second, and third fuel supplies 150, 152, 158 can be provided with the same fuel from a common fuel source, while it is contemplated that each of the first, second, and third fuel supplies 150, 152, 158 are provided with a different fuels or fuel additives. The supply of fuel is provided from the first fuel supply 150 to the central passage 140 through the first set of fuel supply passages 154 and is provided from the second fuel supply 152 to the outer passage 142 through the second set of fuel supply passages 156. The supply of fuel is further provided to the outer passage 142 from the third fuel supply 158 through the third set of fuel supply passages 160.

Within the central passage 140, the supply of air provided from the first set of apertures 184 is turbulated by the first set of turbulators 190. The turbulated supply of air is then mixed with the supply of air provided from the first set of air supply passages 172 and with the supply of fuel from the first set of fuel supply passages 154. The mixture of fuel and air within the central passage 140 exhausts at the central passage outlet 146 for combustion within the combustor 30 (FIG. 2).

Within the outer passage 142, the supply of air from the second and third sets of apertures 184, 186 passes into the outer passage 142 and is turbulated by the second and third sets of turbulators 192, 194. The turbulated supply of air is then mixed with the supply of air provided by the second and third sets of air supply passages 176, 180 and the supply of fuel from the second and third sets of fuel supply passages 156, 160. The mixture of fuel and air within the outer passage 142 exhausts at the outer passage outlet 148 for combustion within the combustion chamber 118 (FIG. 2).

The fuels provided from the first, second, and third fuel supplies 150, 152, 158 can be similar or different fuels, such as liquid fuels, atomized liquid fuels, gaseous fuels, or fuel additives. In this way, three different fuels or fuel additives are permitted to be intermixed with the supply of air among the central passage 140 and the outer passage 142. Additionally, the particular flow rates or volumes for each of the fuels can be controlled or determined, such that various fuel mixes are possible at varying ratios, as well as the particular flow rates or volumes for the supply of air, and can define a fuel to air ratio as a ratio of the supply of fuel to the supply of air. In a non-limiting example, the fuel to air ratio can be greater than or equal to 0.005 and less than or equal to 0.060.

More specifically, the fuel supply 104 (FIG. 2) can feed supplies of fuel to the fuel injector 102 in a metered manner to control the flow rates. In a non-limiting example, a system of valves can be utilized to determine specific flow rates for each supply of fuel. Such a system of valves can be coupled to a controller, for example, which can be utilized to control fuel supplies based upon operational condition of the turbine engine or aircraft carrying the turbine engine, for example. In a non-limiting example, such a controller can increase fuel supplies, or supplies of a particular type of fuel during takeoff or ascend, which can require greater engine thrust, requiring a greater among of fuel, while decreasing or ceasing certain fuel supplies as the operational conditions and requirements change during operation.

Benefits may be appreciated for the aspects disclosed herein. Three different fuels or fuel additives may be intermixed with a supply of air for combustion among the central passage 140 and the outer passage 142, permitting efficient combustion within the combustor 30 (FIG. 2). Additionally, the fuel injector 102 permits a reduction in emissions, such as by incorporation of additional or different fuels, or fuel additives, resulting in lesser emissions within the single fuel injector system. More specifically, low or no emission fuels, such as gaseous fuels or hydrogen fuels, can be supplied to the fuel injector 102 through one or more of the first, second, or third fuel supplies 150, 152, 158 permitting a reduction in emissions generated by the fuel injector 102. The fuel injector 102 permits intermixing of the fuels with air, as well as other fuels, air, or additives. For example, liquid fuels may be incorporated during different engine operational conditions, such as during engine start or takeoff, where fuel consumption requirements can be different or increased. In another non-limiting example, water injection may be provided by one of the first, second, or third fuel supplies 150, 152, 158 to provide richer fuel burn.

Furthermore, the annular design for the fuel injector 102 facilitates sealing and provides uniformity in flow rates and volumes among annular or can-annular style combustors. The annular shape of the body 130 facilitates fuel routing among three fuel supplies, which improves manufacturability and installation.

Additionally, it is contemplated that the fuel injector 102 can be utilized within existing combustors, such as those having an annular or can-annular style, which can be used to replace or retrofit existing combustor systems. Such replacement or retrofitting can be used to decrease emissions of existing engines by the incorporation of the fuel injector 102 capable of utilizing hydrogen or gaseous fuels, as well as improve efficiencies or reduce fuel burn.

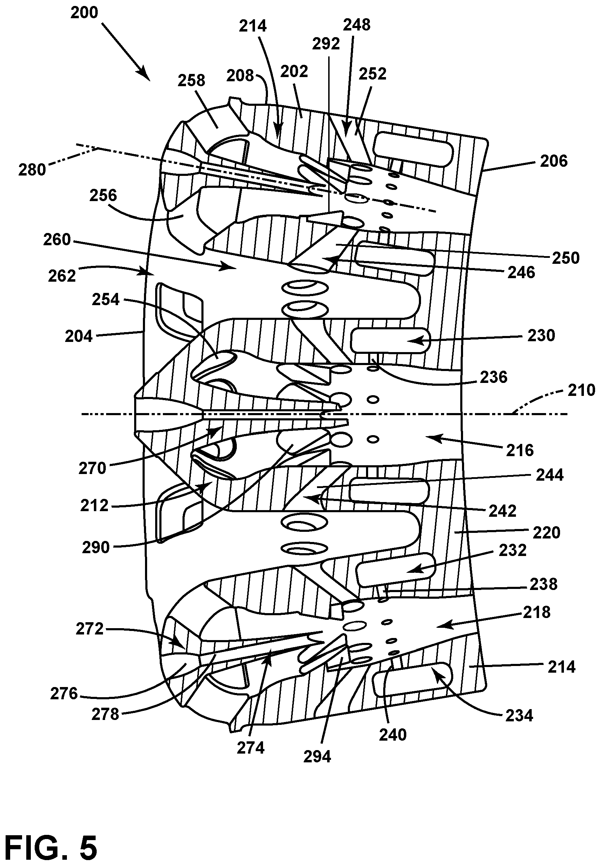

FIG. 5 shows a section view of a fuel injector 200 including a body 202 extending from a first side 204 to a second side 206, an including an exterior surface 208 extending therebetween. A longitudinal axis 210 can be defined by and extending through the fuel injector 200. The body 202 can include a first annular structure 212 surrounding a central passage 216 and a second annular structure 214 in annular arrangement about a set of outer passages 218 in annular arrangement between the first annular structure 212 and the second annular structure 214. The set of outer passages 218 can be arranged as a set of discrete passages in annular arrangement exterior of the first annular structure 212. An aft wall 220 including the second side 206 joins the first annular structure 212 to the second annular structure 214. The aft wall 220 can be curved or concave, such that the outer passage 218 has a converging cross-sectional area in a direction extending toward the aft wall 220. Furthermore, the arrangement of the second side 206, the set of outer passages 218, or both can provide a flow exhausting from the outer passage 218, or a streamline thereof, that is arranged locally perpendicular to the second side 206. In this way, the set of outer passages 218 converge toward the longitudinal axis 210 in a direction toward the aft wall 220.

A first fuel supply 230 and a second fuel supply 232 are provided in the first annular structure 212 and a third fuel supply 234 is provided in the second annular structure 214. A first set of fuel supply passages 236 fluidly couples the first fuel supply 230 to the central passage 216 and a second set of fuel supply passages 238 fluidly couples the second fuel supply 232 to the set of outer passages 218. A third set of fuel supply passages 240 fluidly couple the third fuel supply 234 to the set of outer passages 218.

A first air supply 242 is provided as a first set of air supply passages 244 provided in annular arrangement within the first annular structure 212 exhausting to the central passage 216. A second air supply 246 is provided as a second set of air supply passages 250 in annular arrangement within the first annular structure 212 exhausting to the set of outer passages 218. A third air supply 248 is provided as a set of air supply passages 252 in annular arrangement extending through the second annular structure 214.

A first set of apertures 254 and a second set of apertures 256 are provided in annular arrangement in the first annular structure 212 with the first set of apertures 254 opening to the central passage 216 and the second set of apertures 256 opening to the set of outer passages 218. A third set of apertures 258 are provided in annular arrangement about the second annular structure 214 opening to the set of outer passages 218.

An annular cavity 260 extends into the first annular structure 212 and can supply a volume of air to the first set of air supply passages 244 and the second set of air supply passages 250. An open face 262 for the first side 204 permits a supply of air to pass through the first side 204 to the annular cavity 260 to supply the first and second air supplies 242, 246.

A first centerbody 270 can extend from the first annular structure 212 to position with the central passage 216 and can align with the longitudinal axis 210. A set of second centerbodies 272 can position among the set of outer passages 218, with each outer passage including one centerbody of the set of second centerbodies 272. That is, the set of second centerbodies 272 can be a set of multiple centerbodies in annular arrangement about the longitudinal axis 210 among the set of outer passages 218. The first centerbody 270 and the set of second centerbodies 272 can each include a centerbody passage 274 having a converging portion 276 and a constant cross-sectional area portion 278, while any geometry for the centerbody passages 274 is contemplated. In a non-limiting example, the first centerbody 270 can exhaust to the central passage 216 aligned with where the first set of air supply passages 244 exhaust to the central passage 216, defined perpendicular to the longitudinal axis 210. The first or second centerbodies 270, 272, or combinations thereof, can be one of a fuel tube, a premixer, a water injection tube, an acoustic damper, or a pilot tube, in non-limiting examples. A fuel tube can supply a volume of fuel to its respective passage. A premixer can premix a volume of fuel and air for supply to a respective passage. A water injection tube can provide a supply of water for richer fuel burn. An acoustic damper can provide damping to areas local to a respective passage or the acoustic damper. A pilot tube can provide a supply of pilot fuel used for ignition of the engine.

The set of second centerbodies 272 can be angled toward the longitudinal axis 210 due to the converging nature of the outer passage 218 as it extends toward the aft wall 220, such that the set of second centerbodies 272 are centered within the outer passage 218. Such an angled orientation can be defined by an outer passage axis 280 defined centrally within the set of outer passages 218 or the set of second centerbodies 272. The outer passage axis 280 can be arranged to intersect the longitudinal axis 210, or where an angle between the outer passage axis 280 and the longitudinal axis 210 is greater than zero degrees (0°) or can be greater than or equal to one degree (1°) and less than or equal to ninety degrees (90°). In a non-limiting example, the angle could be less than or equal to 45 degrees (45°). In another non-limiting example, the angled orientation for the set of outer passages 218 or the set of second centerbodies 272 can be in a radially inward direction toward the longitudinal axis 210, while it is contemplated that the outer passage axis 280 may be offset from intersecting the longitudinal axis 210, such as being arranged parallel to the longitudinal axis 210, or tangentially offset to impart a swirl to a fluid or gas emitted from the set of second centerbodies 272.

A first set of turbulators 290 extends from the first annular structure 212 into and in annular arrangement about the central passage 216. A second set of turbulators 292 extends from the first annular structure 212 into the set of outer passages 218 in annular arrangement about the first annular structure 212 and a third set of turbulators 294 extends from the second annular structure 214 into the outer passage 218 in annular arrangement about the second annular structure 214. Each turbulator among the first, second, and third sets of turbulators 290, 292, 294 can have a ramped shape, for example, similar to that of FIG. 4. In an alternate non-limiting example, any shape or geometry for the turbulators among the first, second, and third sets of turbulators 290, 292, 294 is contemplated. The first set of turbulators 290 can terminate where the first set of air supply passages 244 exhaust to the central passage 216 and the second and third sets of turbulators 292, 294 can terminate where the second and third sets of air supply passages 250, 252 exhaust to the outer passage 218, respectively.

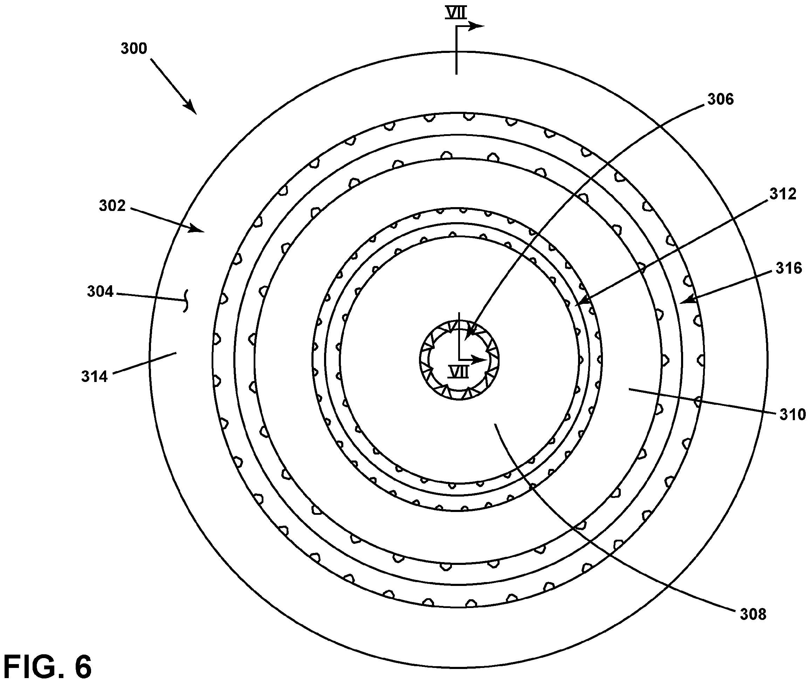

FIG. 6 shows a view of a fuel injector 300 including a body 302 looking in the forward direction at an aft side 304. The fuel injector 300 of FIG. 6 can be similar to the fuel injector 102 of FIG. 4, while having an additional third annular structure positioned exterior of a first and second annular structure.

A central passage 306 is defined centrally within a first annular structure 308 and extends through the body 302. A second annular structure 310 is positioned in annular arrangement about the first annular structure 308 and is spaced from the first annular structure 308 by an intermediate passage 312. A third annular structure 314 is positioned in annular arrangement about the second annular structure 310 and is spaced from the second annular structure 310 by an outer passage 316.

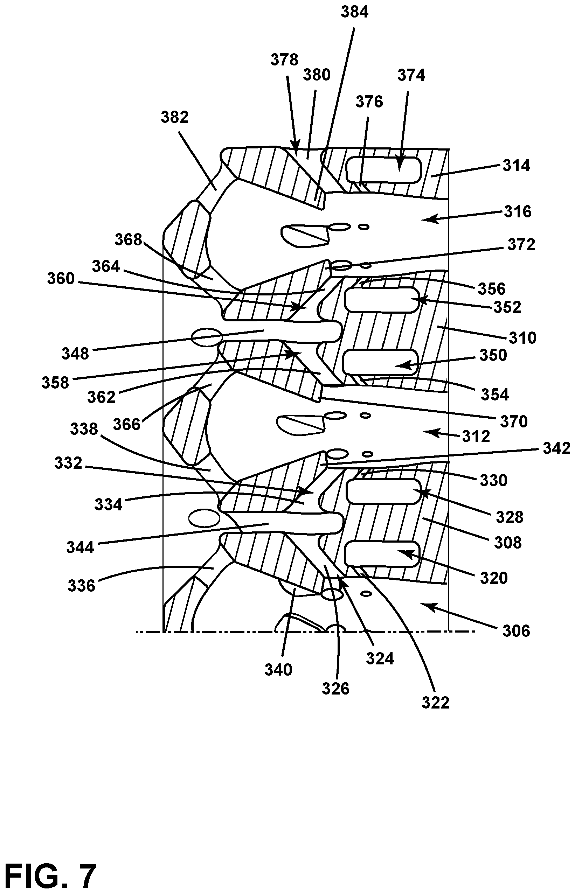

Referring to FIG. 7, a first fuel supply 320 is provided in annular arrangement about the first annular structure 308 and exhausts to the central passage 306 through a first set of fuel supply passages 322. A first air supply 324 is provided in the first annular structure 308 as a first set of air supply passages 326 exhausting to the central passage 306. A second fuel supply 328 is provided in annular arrangement about the first annular structure 308 exterior of the first fuel supply 320 and exhausts to the intermediate passage 312 through a second set of fuel supply passages 330. A second air supply 332 is provided in the first annular structure 308 as a second set of air supply passages 334 exhausting to the intermediate passage 312. A first set of apertures 336 can be provided in the first annular structure 308 opening to the central passage 306 and a second set of apertures 338 can be provided in the first annular structure 308 opening to the intermediate passage 312. A first set of turbulators 340 extends from the first annular structure 308 into the central passage 306 and a second set of turbulators 342 extends from the first annular structure 308 into the intermediate passage 312. A first conduit 344 extends into the first annular structure 308 fluidly coupling to the first and second air supplies 324, 332.

A third fuel supply 350 and a fourth fuel supply 352 are provided in the second annular structure 310 with the fourth fuel supply 352 positioned exterior of the third fuel supply. A third set of fuel supply passages 354 fluidly couples the third fuel supply 350 to the intermediate passage 312 and a fourth set of fuel supply passages 356 fluidly couples the fourth fuel supply 352 to the outer passage 316. A third air supply 358 and a fourth air supply 360 are provided in the second annular structure 310 as a third set of air supply passages 362 and a fourth set of air supply passages 364, respectively. The third set of air supply passages 362 exhausts to the intermediate passage 312 and the fourth set of air supply passages 364 exhausts to the outer passage 316. A third set of apertures 366 and a fourth set of apertures 368 are provided in the second annular structure 310 opening to the intermediate passage 312 and the outer passage 316, respectively. A third set of turbulators 370 extends from the second annular structure 310 into the intermediate passage 312 and a fourth set of turbulators 372 extends from the second annular structure 310 into the outer passage 316. A second conduit 348 extends into the second annular structure 310 fluidly coupling to the third and fourth air supplies 358, 360.

A fifth fuel supply 374 is provided in the third annular structure 314 and exhausts to the outer passage 316 through a fifth set of fuel supply passages 376. A fifth air supply 378 is provided in the third annular structure 314 as a fifth set of air supply passages 380 exhausting to the outer passage 316. A fifth set of apertures 382 open to the outer passage 316 through the third annular structure 314 and a fifth set of turbulators 384 extends into the outer passage 316 from the third annular structure 314.

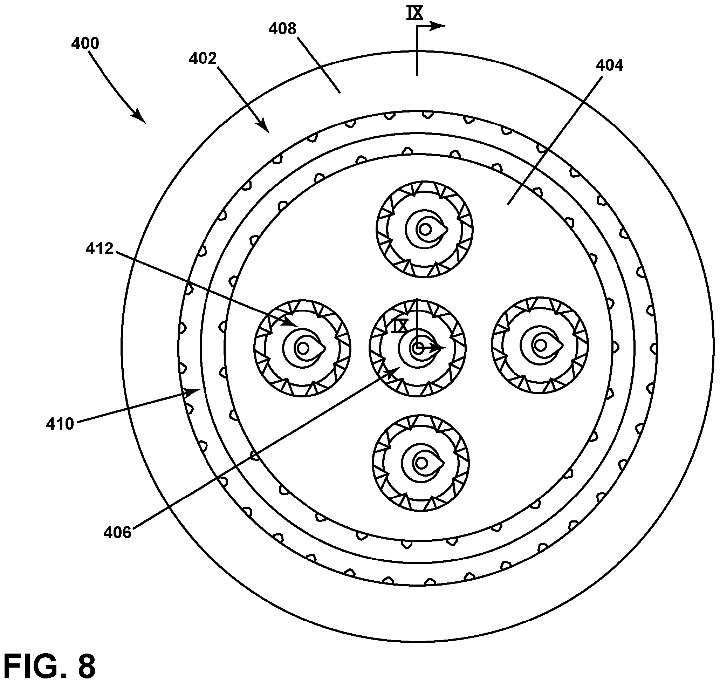

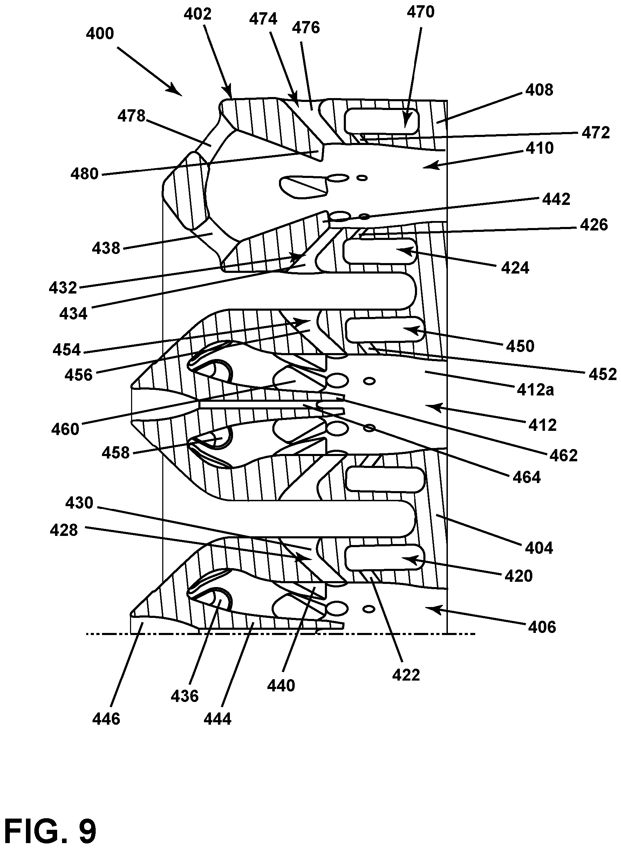

Referring to FIG. 8, a fuel injector 400 includes a body 402 having a first annular structure 404 provided about a central passage 406 and spaced from a second annular structure 408 by an outer passage 410. A set of intermediate passages 412 are arranged within the first annular structure 404 in annular arrangement about the central passage 406. Each intermediate passage of the set of intermediate passages 412 can be substantially similar to the central passage 406, with each having their own dedicated fuel supplies and air supplies, as is best appreciated in FIG. 9. Any number, spacing, sizing, or orientation for the set of intermediate passages 412 is contemplated. In additional non-limiting examples, a fuel injector need not include the outer passage 410, a fuel injector can include an annular passage like that of the outer passage 410 but positioned radially interior of a set of passages like the set of intermediate passages 412, or that a central passage is formed as a set of individual passages in annular arrangement about a longitudinal axis for a fuel injector like that of the set of intermediate passages 412, or combinations thereof.

Referring now to FIG. 9, the first annular structure 404 can include a first fuel supply 420 exhausting to the central passage 406 through a first set of fuel supply passages 422 in annular arrangement about the central passage 406. A second fuel supply 424 can exhaust to the outer passage 410 through a second set of fuel supply passages 426 in annular arrangement about the first annular structure 404. A first air supply 428 can be provided in the first annular structure 404 as a first set of air supply passages 430 exhausting to the central passage 406 and a second air supply 432 can be provided as a second set of air supply passages 434 exhausting to the outer passage 410, each in annular arrangement about the first annular structure 404. A first set of apertures 436 can be provided in the first annular structure 404 opening to the central passage 406 and a second set of apertures 438 can be provided in the first annular structure 404 opening to the outer passage 410. A first set of turbulators 440 can extend from the first annular structure 404 into the central passage 406 and a second set turbulators 442 can extend from the first annular structure 404 into the outer passage 410, each in annular arrangement about the first annular structure 404. A centerbody 444 can extend from the first annular structure 404 into the central passage 406 having a centerbody passage 446 exhausting to the central passage 406.

The first annular structure 404 further includes structures dedicated to each intermediate passage 412a of the set of intermediate passages 412. That is, the first annular structure 404 includes, for each intermediate passage 412a of the set of intermediate passages 412, a third fuel supply 450, a third set of fuel supply passages 452, a third air supply 454, a third set of air supply passages 456, a third set of apertures 458, and a third set of turbulators 460. The third fuel supply 450 is provided in annular arrangement about the intermediate passage 412a and fluidly exhausts to the intermediate passage 412a through the third set of fuel supply passages 452, also in annular arrangement about the intermediate passage 412a. The third air supply 454 is provided as a third set of air supply passages 456 in annular arrangement about the intermediate passage 412a. A third set of apertures 458 and a third set of turbulators 460 are provided in annular arrangement about the intermediate passage 412a, with the third set of turbulators 460 extending into the intermediate passage 412a. An intermediate passage centerbody 462 can extend in the intermediate passage 412a and includes an intermediate centerbody passage 464 exhausting into the intermediate passage 412a.

The second annular structure 408 can include a fourth fuel supply 470 fluidly coupled to the outer passage 410 by a fourth set of fuel supply passages 472 in annular arrangement about the second annular structure 408. A fourth air supply 474 can be provided in the second annular structure 408 as a fourth set of air supply passages 476 exhausting to the outer passage 410 and in annular arrangement about the second annular structure 408. A fourth set of apertures 478 can be provided in annular arrangement about the second annular structure 408 opening to the outer passage 410. A fourth set of turbulators 480 can extend from the second annular structure 408 into the outer passage 410 in annular arrangement about the second annular structure 408.

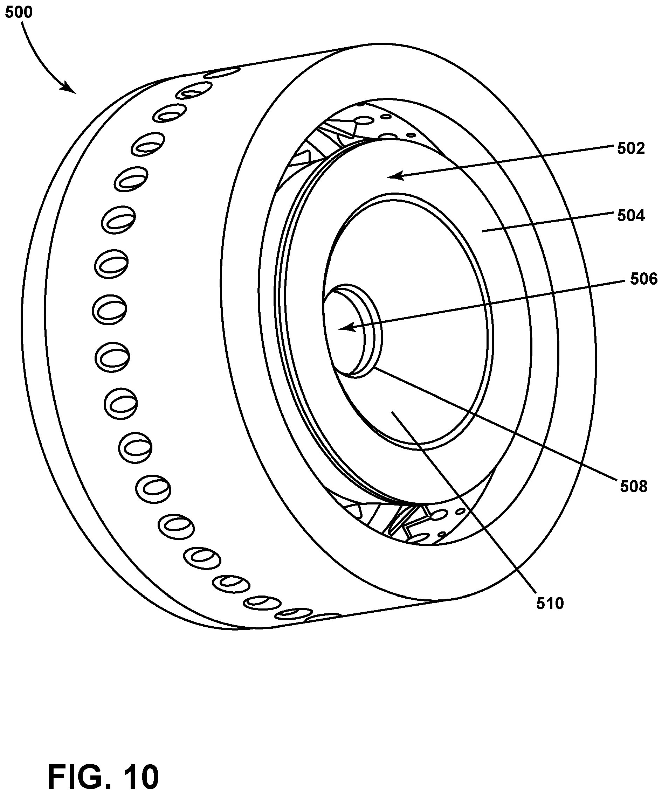

FIG. 10 depicts a fuel injector 500 that can be substantially similar to that of FIG. 4, and the discussion will be limited to the differences between the two. The fuel injector 500 includes a first annular structure 502 having an aft side 504 in annular arrangement about a central passage 506. The central passage 506 terminates at an outlet 508 positioned forward of the aft side 504 relative to a flow direction through the central passage 506. A connecting wall 510 extends from the outlet 508 to the aft side 504 and defines an increasing cross-sectional area extending in a direction toward the aft side 504. The increasing cross-sectional area defined by the connecting wall 510 can diffuse a mixture of fuel and air exhausting from the outlet 508 prior to reaching the aft side 504. In a non-limiting example, the connecting wall 510 can be conic, such as frustoconical, oriented at a constant angle relative to the aft side 504. In another non-limiting example, the connecting wall 510 can be curved, defining a changing rate of increasing cross-sectional area as it extends toward the aft side 504. In additional non-limiting examples, the connecting wall 510 can be conic, curved, angled, or can be variable, such as having discrete changes along the connecting wall 510, such as having local curved or linear portions, concave portions, convex portions, or combinations thereof such as a sinusoidal geometry. Such local shaping for the connecting wall 510 can be utilized to control a flame shape for a flame extending from the central passage 506 during operation of the fuel injector 500.

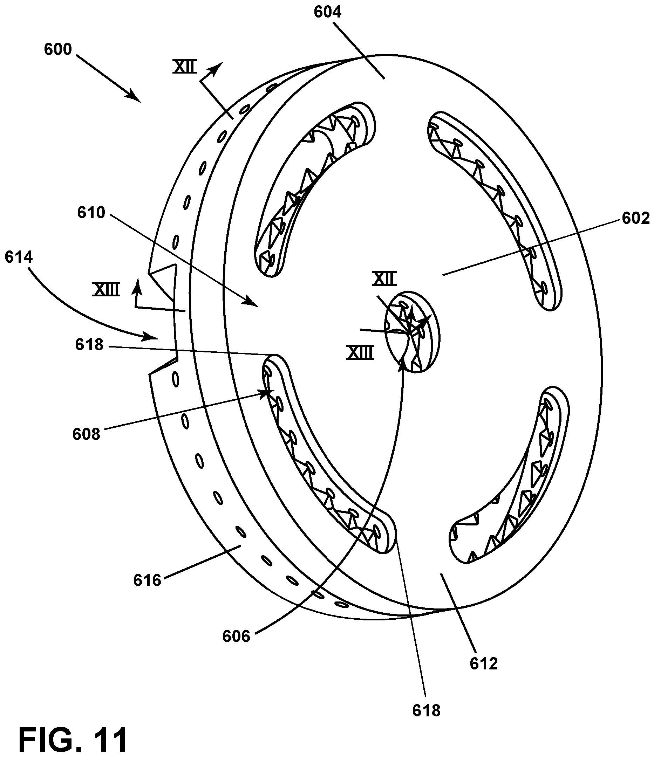

FIG. 11 depicts a fuel injector 600 that can be similar to that of FIG. 4, while the fuel injector 600 of FIG. 11 includes an outer passage that is separated into a set of segments, while the outer passage 142 of FIG. 4 is continuous to define a complete annulus. The fuel injector 600 includes a first annular structure 602 in annular arrangement about a central passage 606 and a second annular structure 604 being spaced from the first annular structure 602 by a set of outer passages 608 in annular arrangement exterior of the first annular structure 602. A set of bridges 610 are defined between adjacent passages of the set of outer passages 608 and connect the first annular structure 602 to the second annular structure 604 along an aft side 612. A set of recesses 614 can extend into an exterior surface 616 of the second annular structure 604 and can be aligned with the set of bridges 610 relative to the annular shape of the second annular structure 604. Each outer passage of the set of outer passages 608 can extend between opposing ends 618 defined at the set of bridges 610.

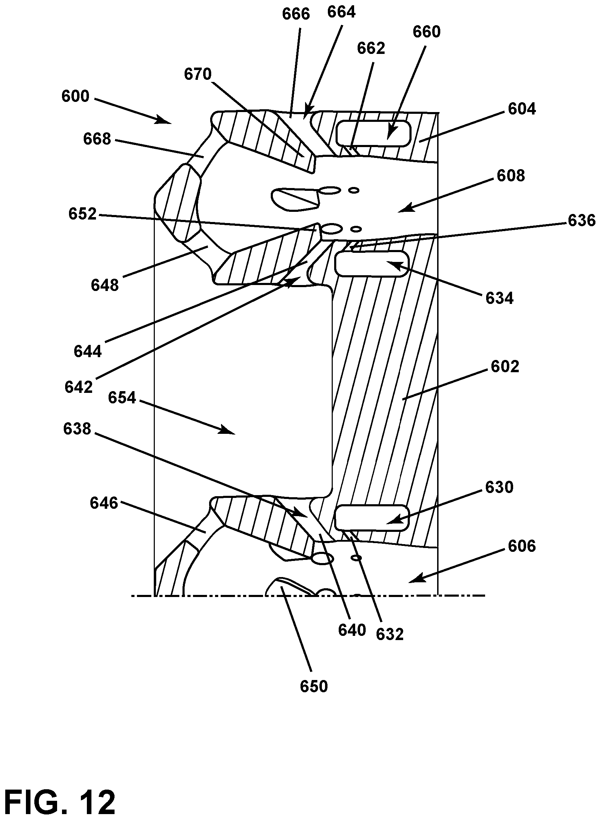

Referring to FIG. 12, taken along section XII-XII of FIG. 11 extending through one outer passage of the set of outer passages 608, the first annular structure 602 includes a first fuel supply 630 fluidly coupled to the central passage 606 by a first set of fuel supply passages 632 and a second fuel supply 634 fluidly coupled to the set of outer passages 608 by a second set of fuel supply passages 636. A first air supply 638 and a second air supply 642 are provided in the first annular structure 602 as a first set of air supply passages 640 and a second set of air supply passages 644. A cavity 654 can be formed in the first annular structure 602 and can provide a supply of air to the first and second air supplies 638, 642. A first set of apertures 646 extends through the first annular structure 602 exhausting to the central passage 606 and a second set of apertures 648 extends through the first annular structure 602 exhausting to the set of outer passages 608. A first set of turbulators 650 extends from the first annular structure 602 into the central passage 606 and a second set of turbulators 652 extends from the first annular structure 602 into the set of outer passages 608.

The second annular structure 604 includes a third fuel supply 660 fluidly coupled to the set of outer passages 608 by a third set of fuel supply passages 662. A third air supply 664 extends though the second annular structure 604 as a third set of air supply passages 666. A third set of apertures 668 are provided in the second annular structure 604 exhausting to the set of outer passages 608 and a third set of turbulators 670 extends from the second annular structure 604 into the set of outer passages 608.

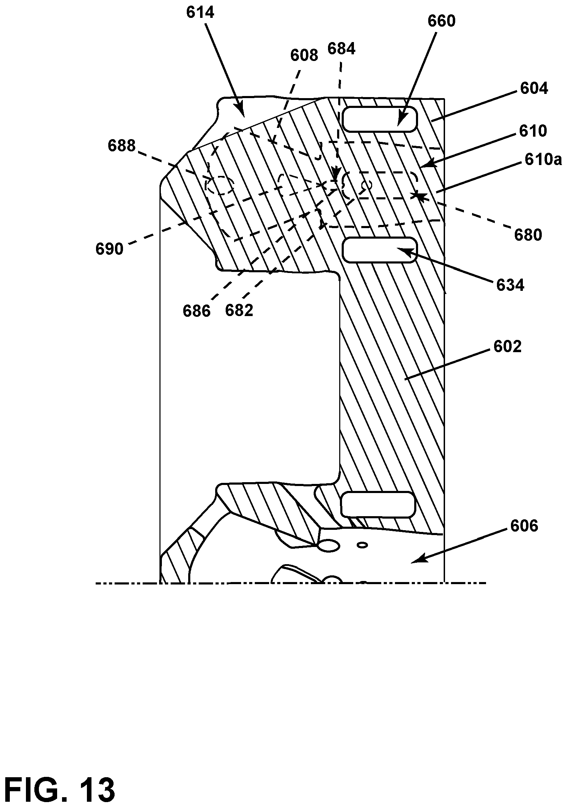

Referring now to FIG. 13, taken along section XIII-XIII of FIG. 11 extending through one bridge 610a of the set of bridges 610, illustrates a solid body connecting the first annular structure 602 to the second annular structure 604. The second and third fuel supplies 634, 660 can extend through the set of bridges 610, being provided as annular cavities within the fuel injector 600. The set of recesses 614 extends into the second annular structure 604 at the set of bridges 610.

It should be appreciated that additional features (shown in broken line) can be provided within the set of bridges 610 to provide fuel and air to the set of outer passages 608 at the opposing ends 618 (FIG. 11). The set of outer passages 608 are also shown in broken line for reference. More specifically, the set of bridges 610 at each opposing end 618 (FIG. 11) of the set of outer passages 608 can include a bridge fuel supply 680 exhausting to the set of outer passages 608 through a set of bridge fuel supply passages 682. The bridge fuel supply 680 can supply the same fuel as one or both of the second fuel supply 634 and the third fuel supply 660 in non-limiting examples or may be provided a supply of fuel from the second fuel supply 634 and the third fuel supply 660. A bridge air supply 684 can be provided as a set of bridge air supply passages 686 extending through the set of bridges 610. In a non-limiting example, the bridge air supply 684 can be provided from the cavity 654, such as having the set of bridge air supply passages 686 fluidly coupling the cavity 654 to the set of outer passages 608. A set of bridge apertures 688 can exhaust into the set of outer passages 608 through the set of bridges 610 and a set of bridge turbulators 690 can extend into the set of outer passages 608 from the set of bridges 610.

It should be appreciated that the set of bridges 610 and the features provided at the set of bridges 610 can be utilized to reduce or eliminate dead spots or areas with lack of suitable fuel supplies at the opposing ends 618 of the set of outer passages 608, and can be implemented in a way that provides continuity among the first annular structure 602 and the second annular structure 604 at the set of outer passages 608. In an alternate non-limiting example, it is contemplated that such features are absent from the set of bridges 610 or the opposing ends 618.

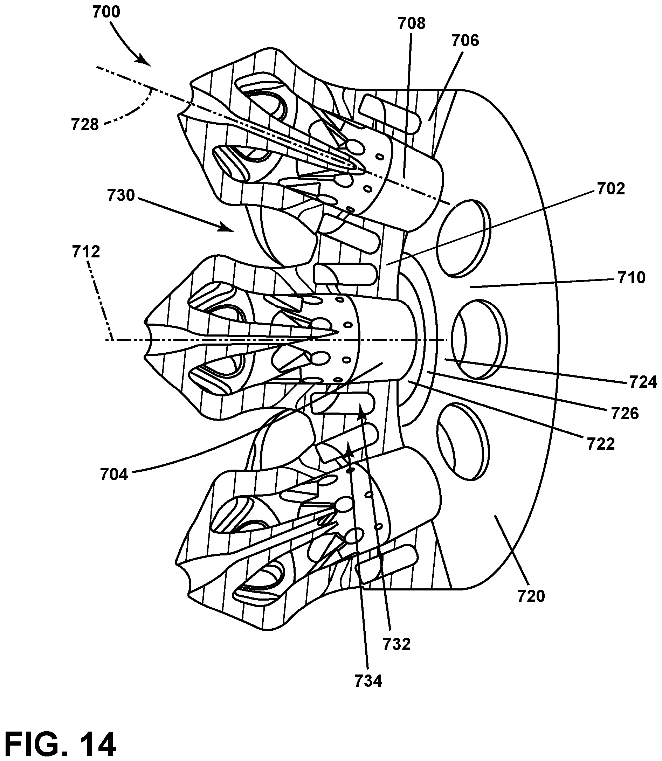

FIG. 14 depicts a cross-sectional view of a fuel injector 700 including a first annular structure 702 in annular arrangement about a central passage 704. A second annular structure 706 is provided in annular arrangement about the first annular structure 702, with a set of outer passages 708 provided between the first annular structure 702 and the second annular structure 706. A set of bridges 710 connect the first annular structure 702 to the second annular structure 706 between adjacent outer passages of the set of outer passages 708. A longitudinal axis 712 can be defined by the fuel injector 700 extending through the central passage 704.

An aft side 720 extends among the first and second annular structures 702, 706 as well as the set of bridges 710. The aft side 720 can include a planar portion 722 and a conic portion 724, with a bend portion 726 transitioning between the planar portion 722 and the conic portion 724. The planar portion 722 can be arranged perpendicular to the longitudinal axis 712. The conic portion 724 can form at least a portion of a cone, such as having a frustoconical shape.

Each outer passage of the set of outer passages 708 can define a passage axis 728. The set of outer passages 708 can be arranged such that the passage axis 728 intersects the longitudinal axis 712 at a position aft of the aft side 720, the passage axis 728 is arranged perpendicular to the conic portion 724 of the aft side 720, or both.

Additionally, it should be appreciated that an annular cavity 730 terminates forward of a first fuel supply 732 and a second fuel supply 734, as compared to the annular cavity 260 of FIG. 5, which is positioned between the first and second fuel supply 230, 232. It should be understood that any suitable shape or geometry for the annular cavity 730 is contemplated. A relatively larger annular cavity 730 can reduce the weight of the fuel injector 700, for example, while enough body area is required to route fuels to the first and second fuel supplies 732, 734.

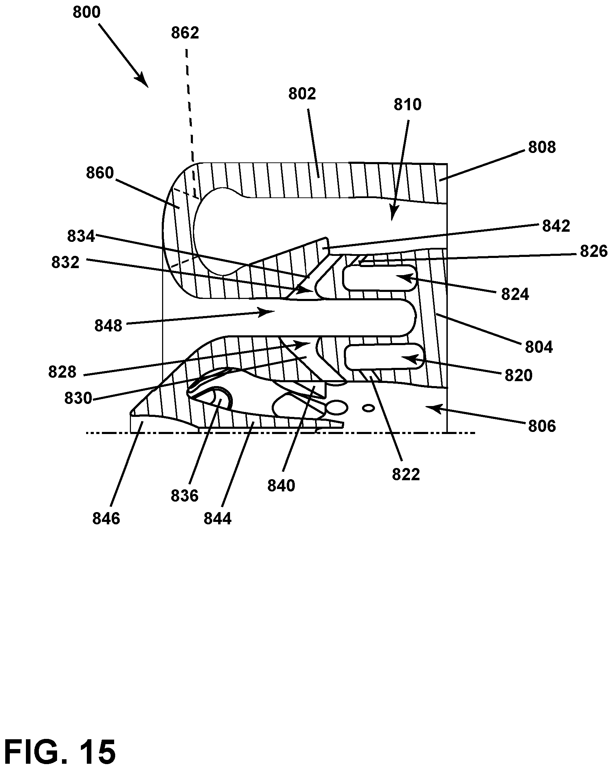

Referring to FIG. 15, a fuel injector 800 includes a body 802 having a first annular structure 804 provided about a central passage 806 and spaced from a second annular structure 808 by an outer passage 810. The first annular structure 804 can include a first fuel supply 820 exhausting to the central passage 806 through a first set of fuel passages 822 in annular arrangement about the central passage 806. A second fuel supply 824 can exhaust to the outer passage 810 through a second set of fuel supply passages 826 in annular arrangement about the first annular structure 804. A first air supply 828 can be provided in the first annular structure 804 as a first set of air supply passages 830 exhausting to the central passage 806 and a second air supply 832 can be provided as a second set of air supply passages 834 exhausting to the outer passage 810, each in annular arrangement about the first annular structure 804. A first set of apertures 836 can be provided in the first annular structure 804 opening to the central passage 806. A first set of turbulators 840 can extend from the first annular structure 804 into the central passage 806 and a second set turbulators 842 can extend from the first annular structure 804 into the outer passage 810, each in annular arrangement about the first annular structure 804. A centerbody 844 can extend from the first annular structure 804 into the central passage 806 having a centerbody passage 846 exhausting to the central passage 806. A cavity 848 extends into the first annular structure 804 and fluidly couples to the first and second air supplies 828, 832.

A forward wall 860 in annular arrangement couples the first annular structure 804 to the second annular structure 808 forward of the outer passage 810. A second set of apertures 862 in annular arrangement about the forward wall 860 exhaust to the outer passage 810 to supply a volume of air to the outer passage 810.

The second annular structure 808 can include no features, such as fuel or air supplies, as compared to that of FIGS. 4-14, where the outer-most annular structure contains fuel and air supplies. It should be appreciated that the second annular structure, or any annular structure as described herein, can include, or may not include, one or more of a fuel supply, a set of fuel supply passages, an air supply, a set of air supply passages, a set of turbulators, a set of apertures, or a centerbody in non-limiting examples. Particular engine or flight requirements may not need additional features provided in an outer annular structure, or any annular structure, and therefore, additional combinations are contemplated that do not include one or more features within an annular structure. Similarly, it is contemplated that features can be provided on only one side of an annular structure, such as only on an inner diameter or an outer diameter for an outer passage, such as the outer passage 810 of FIG. 15.

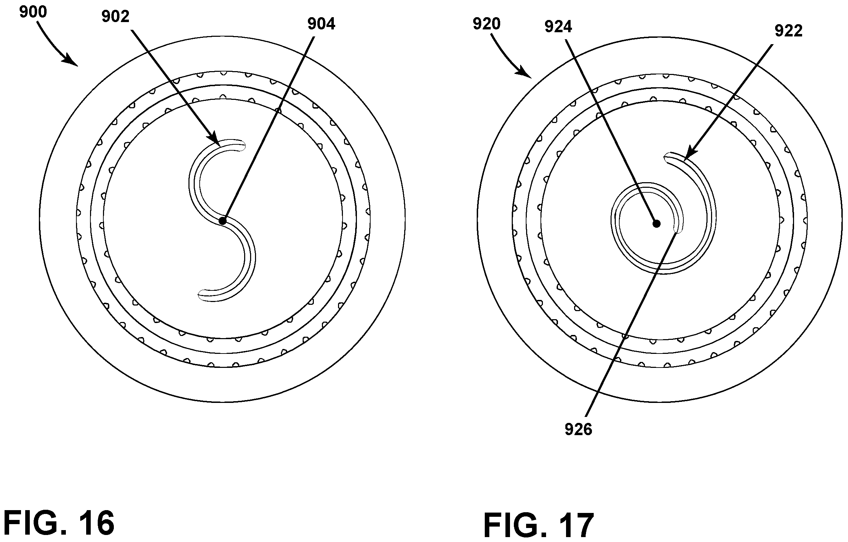

FIGS. 16-19 illustrate additional exemplary fuel injectors having first annular structure spaced from a second annular structure by an annular outer passage. FIGS. 16-19 depict different examples of shapes for a central passage positioned within the first annular structure. Each first annular structure carrying the central passage among FIGS. 16-19 can include a fuel supply, a first set of fuel supply passages, a first air supply, a first set of air supply passages, a first set of apertures, and a first set of turbulators exhausting into or extending into the central passage, similar to other central passages as described herein, such as the central passage 140 of FIG. 4 or the central passage 216 of FIG. 5 in non-limiting examples, while accounting for the shape or structure of the central passages among FIGS. 16-19. In additional non-limiting examples, the central passage among FIGS. 16-19 can be a premixer, a pilot, an acoustic damper, used for liquid fuel, water, steam, or other additives.

FIG. 16 illustrates a fuel injector 900 with a central passage 902 having an "S" shape or a serpentine shape. In a non-limiting example, the center of the "S" can be aligned with a center 904 defined by the annular shape of the fuel injector 900, while an offset is contemplated. Similarly, any rotational orientation of the "S" shape is contemplated. In an additional non-limiting example, the fuel injector 900 can include multiple "S"-shaped passages, such as in annular arrangement about the center 904 of the fuel injector 900.

FIG. 17 illustrates a fuel injector 920 with a central passage 922 having a spiral shape having an increasing radius of curvature as distance from a center 924 of the fuel injector 920 increases. In non-limiting examples, an inner-most end 926 of the spiral can be arranged centrally within the fuel injector 920, while any positioning is contemplated. Additionally, multiple spirals are contemplated, such as in annular arrangement about a common central passage or center of the fuel injector 920.

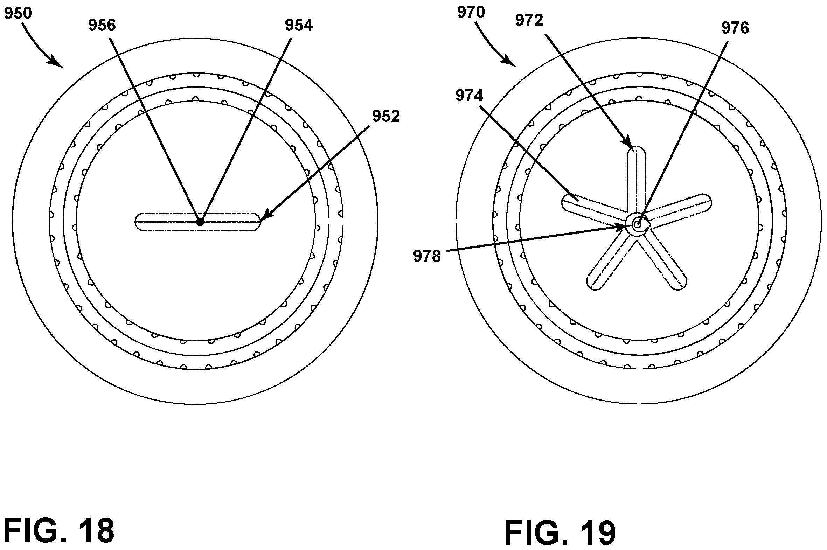

FIG. 18 illustrates a fuel injector 950 with a central passage 952 having a linear shape or arrangement. Any positioning or orientation for the linear shape of the central passage 952 is contemplated. For example, a center 954 of the central passage 952 can be aligned with a fuel injector center 956, defined by the annular shape of the fuel injector 950, as shown in FIG. 18, while offset or non-centered arrangement are contemplated. Additionally, multiple linear passages are contemplated, such as in an annular arrangement about the fuel injector 950 in a non-limiting example.

FIG. 19 illustrates a fuel injector 970 with a central passage 972 having a star shape. The star shape for the central passage 972 defines a set of arms 974 joined together at a common center 976. A centerbody 978 can be positioned within and located centrally within the central passage 972, such as at the common center 976. Multiple star-shaped passages are contemplated, such as in annular arrangement about the fuel injector 970 in a non-limiting example.

It should be appreciated that any shape or geometry defined by a central passage described herein is contemplated, including but not limited to, annular, round, circular, oval, racetrack, elliptical, linear, curved, curvilinear, geometric, square, triangular, rectangular, star-shaped, spiral-shaped, s-shaped, sinusoidal, or combinations thereof and can be provided in any arrangement within a fuel injector.

Benefits associated with the fuel injectors described herein include reduced difficulty with routing fuels, in addition to a reduction in local stress concentrations, and improved thermal viability. The annular shape facilitates sealing at the fuel injector, reducing the occurrence of leaks and related required maintenance, as well as permitting retrofitting current combustors to include the fuel injectors described herein, such as can and can-annular, or other can-style combustors. The annular shape also provides even flow rates along all portions of the fuel injector.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

It will be appreciated that the fuel injectors, and aspects thereof, as discussed herein are provided by way of example only and that in other exemplary embodiments, the fuel injectors may have any other suitable configurations. The aspects and features provided herein need not be limited to the embodiments as shown, and it is further contemplated that features and aspects from one or more embodiments can be added, removed, or interchanged with one or more other embodiment to define additional embodiments herein.

It should be appreciated that the different fuel injectors and their features as described among FIGS. 4-19 can all be utilized within a common engine, such as the gas turbine engine 10 of FIG. 1, or within a common component, such as the combustor 30 of FIG. 2, and it should be understood that the fuel injectors and their features are not mutually exclusive.

Further aspects are provided by the subject matter of the following clauses:
A fuel injector for a gas turbine engine comprising a compressor section, combustor section, and turbine section is serial flow arrangement, the fuel injector comprising: a first annular structure defining a central passage; a second annular structure in annular arrangement about the first annular structure and defining an outer passage in annular arrangement between the first annular structure and the second annular structure; a first fuel supply formed in the first annular structure including a first set of fuel supply passages opening into and in annular arrangement about the central passage; a second fuel supply formed in the first annular structure including a second set of fuel supply passages opening into and in annular arrangement about the outer passage; a first air supply formed in the first annular structure including a first set of air supply passages opening into and in annular arrangement about the central passage and a second set of air in annular arrangement about in the first annular structure and opening into the outer passage; and a second air supply formed in the second annular structure and comprising a third set of air supply passages opening into and in annular arrangement about the outer passage.

The fuel injector of any preceding clause, further comprising a centerbody extending into the central passage from the first annular structure.

The fuel injector of any preceding clause, wherein the centerbody is aligned along the longitudinal axis.

The fuel injector of any preceding clause, wherein the centerbody is one of a fuel tube, a premixer, a water injection tube, an acoustic damper, or a pilot tube.

The fuel injector of any preceding clause, further comprising a third fuel supply formed in the second annular structure including a third set of fuel supply passages opening into and in annular arrangement about the outer passage.

The fuel injector of any preceding clause, further comprising a third annular structure provided between the first annular structure and the second annular structure and defining an intermediate passage in annular arrangement between the first annular structure and the third annular structure.

The fuel injector of any preceding clause, further comprising a fourth fuel supply located within the third annular structure including a fourth set of fuel supply passages opening into and in annular arrangement about the second outer passage.

The fuel injector of any preceding clause, further comprising a third air supply located within the third annular structure and comprising a fourth set of air supply passages opening into and in annular arrangement about the second outer passage.

The fuel injector of any preceding clause, further comprising a set of turbulators extending into the second outer passage from at least one of the second annular structure or the third annular structure.

The fuel injector of any preceding clause, wherein the set of turbulators extend into the second outer passage from both of the second annular structure and the third annular structure.

The fuel injector of any preceding clause, further comprising a cavity in annular arrangement within the first annular structure, wherein the cavity is fluidly coupled to the first air supply.

The fuel injector of any preceding clause, wherein the cavity is at least partially positioned between the first fuel supply and the second fuel supply.

The fuel injector of any preceding clause, wherein the cavity is at least partially positioned between the first set of fuel supply passages and the second set of fuel supply passages.

The fuel injector of any preceding clause, further comprising a first set of apertures exhausting to the central passage through the first annular structure forward of the first set of air supply passages and opening into the central passage.

The fuel injector of any preceding clause, further comprising a second set of apertures exhausting to the outer passage through the first annular structure forward of the second set of air supply passages and opening into the outer passage.

The fuel injector of any preceding clause, further comprising a third set of apertures opening to the outer passage through the second annular structure forward of the third set of air supply passages and opening into the outer passage.

The fuel injector of any preceding clause, further comprising an aft side defined among the first annular structure and the second annular structure.

The fuel injector of any preceding clause, wherein the aft side is perpendicular to the longitudinal axis.

The fuel injector of any preceding clause, wherein the aft side is curved.

The fuel injector of any preceding clause, wherein the aft side comprises a first portion arranged perpendicular to the longitudinal axis and a second portion arranged at an angle relative to perpendicular to the longitudinal axis.

The fuel injector of any preceding clause, further comprising an angled side extending from the central passage to the aft side.

The fuel injector of any preceding clause, wherein a flow area is defined as a cross-sectional area for at least the central passage and the outer passage defined perpendicular to the longitudinal axis, wherein a bluff body area is defined as a cross-sectional area of the first annular structure and the second annular structure defined perpendicular to the longitudinal axis along the aft side, and wherein a ratio of flow area to bluff body area is greater than or equal to 0.01 and less than or equal to 10.

The fuel injector of any preceding clause, wherein the annular outer passage is arranged as a set of segments in annular arrangement.

The fuel injector of any preceding clause, further comprising a set of bridges of defined between adjacent segments of the set of segments, and wherein the set of bridges connect the first annular structure to the second annular structure.

The fuel injector of any preceding clause, further comprising a set of recesses in annular arrangement about the second annular structure and aligned with the set of bridges.

The fuel injector of any preceding clause, further comprising a first set of turbulators extending from the first annular structure into the central passage.

The fuel injector of any preceding clause, further comprising a second set of turbulators extending from the first annular structure into the outer passage.

The fuel injector of any preceding clause, further comprising a third set of turbulators extending from the second annular structure into the outer passage.

The fuel injector of any preceding clause, wherein a supply of fuel provided from the first fuel supply and the second fuel supply and a supply of air from the first air supply and the second air supply define a fuel to air ratio as a ratio of the supply of fuel to the supply of air, and wherein the fuel to air ratio is greater than or equal to 0.005 and less than or equal to 0.060.

The fuel injector of any preceding clause, wherein the first annular structure and the second annular structure terminate at an aft side, wherein an outlet diameter is defined as a length occupied by the central passage and the outer passage in a direction extending from and perpendicular to the longitudinal axis, wherein a mixing length is defined as the length from the first set of fuel supply passages to the aft side in a direction along the longitudinal axis, and wherein a ratio of the mixing length to the outlet diameter is greater than zero and less than or equal to 200.

A fuel injector for a gas turbine engine comprising a compressor section, combustor section, and turbine section is serial flow arrangement, the fuel injector comprising: a body; a central passage extending through the body and defining a longitudinal axis; at least one outer passage extending through the body in annular arrangement about the central passage; a first fuel supply in annular arrangement within the body and including a first set of fuel supply passages opening into and in annular arrangement about the central passage; a second fuel supply in annular arrangement about the body and including a second set of fuel supply passages opening into the at least one outer passage and in annular arrangement about the longitudinal axis; a first air supply including a first set of air supply passages opening into and in annular arrangement about the central passage and a second set of air supply passages opening into and in annular arrangement interior of the at least one outer passage; and a second air supply and comprising a third set of air supply passages opening into and in annular arrangement about the at least one outer passage.

The fuel injector of any preceding clause, further comprising a third fuel supply in annular arrangement about the body and including a third set of fuel supply passages opening into the at least one outer passage and in annular arrangement about the longitudinal axis.

The fuel injector of any preceding clause, wherein the at least one outer passage is provided as a set of outer passages in annular arrangement about the central passage.

The fuel injector of any preceding clause, wherein the set of outer passages are the same size, the same shape, or both, as that of the central passage.

The fuel injector of claim 18, wherein the body further comprises an aft side, wherein the aft side is an angled aft side, and wherein the set of outer passages are oriented perpendicular to the angled aft side.

The fuel injector of any preceding clause, wherein the aft side further comprises a planar portion defined perpendicular to the longitudinal axis, and wherein the central passage exhausts at the planar portion.

The fuel injector of any preceding clause, wherein the aft side further comprises a conic portion extending from the planar portion.

The fuel injector of any preceding clause, wherein the set of outer passages each define an axis arranged perpendicular to the conic portion.

The fuel injector of any preceding clause, wherein the set of outer passages are arranged as a set of segments in annular arrangement about the central passage.

The fuel injector of any preceding clause, further comprising a set of intermediate passages in annular arrangement about the central passage, and wherein the at least one outer passage is an annular outer passage and the set of intermediate passages are positioned interior of the annular outer passage.

## Claims

1. A fuel injector (102) for a gas turbine engine (10) comprising a compressor section (22), combustion section (28), and turbine section (32) is serial flow arrangement, the fuel injector (102) comprising:
a first annular structure (136) defining a central passage (140);
a second annular structure (138) in annular arrangement about the first annular structure (136) and defining an outer passage (142) in annular arrangement between the first annular structure (136) and the second annular structure (138);
a first fuel supply (150) formed in the first annular structure (136) including a first set of fuel supply passages (154) opening into and in annular arrangement about the central passage (140);
a second fuel supply (152) formed in the first annular structure (136) including a second set of fuel supply passages (156) opening into and in annular arrangement about the outer passage (142);
a first air supply (170) formed in the first annular structure (136) including a first set of air supply passages (172) opening into and in annular arrangement about the central passage (140) and a second set of air supply passages (176) in annular arrangement about the first annular structure (138) and opening into the first outer passage (142); and
a second air supply (178) formed in the second annular structure (138) and comprising a third set of air supply passages (180) opening into and in annular arrangement about the first outer passage (142).

2. The fuel injector (102) of claim 1, further comprising a centerbody (270) extending into the central passage (140) from the first annular structure (138).

3. The fuel injector (102) of claim 1 or 2, further comprising a third fuel supply (158) formed in the second annular structure (138) including a third set of fuel supply passages (160) opening into and in annular arrangement about the outer passage (142).

4. The fuel injector (102) of any preceding claim, further comprising a third annular structure (310) provided between the first annular structure (136) and the second annular structure (138) and defining an intermediate passage (312) in annular arrangement between the second annular structure (138) and the third annular structure (314).

5. The fuel injector (102) of any preceding claim, further comprising a cavity (168) in annular arrangement in the first annular structure (136), wherein the cavity (168) is fluidly coupled to the first air supply (170).

6. The fuel injector (102) of claim 5, wherein the cavity (168) is at least partially positioned between the first fuel supply (150) and the second fuel supply (152).

7. The fuel injector (102) of any preceding claim, further comprising a first set of apertures (184) exhausting to the central passage (140) through the first annular structure (136) forward of the first set of air supply passages (172).

8. The fuel injector (102) of any preceding claim, further comprising an aft side (134) extending among the first annular structure (136) and the second annular structure (138).

9. The fuel injector (102) of claim 8, wherein the first annular structure (136) defines a longitudinal axis (144) and wherein the aft side (134) is perpendicular to the longitudinal axis (144).

10. The fuel injector (102) of claim 8 or 9, wherein a flow area is defined as a cross-sectional area for at least the central passage (140) and the outer passage (142) defined perpendicular to the longitudinal axis (144), wherein a bluff body area is defined as a cross-sectional area of the first annular structure (136) and the second annular structure (138) defined perpendicular to the longitudinal axis (144) along the aft side (134), and wherein a ratio of flow area to bluff body area is greater than or equal to 0.01 and less than or equal to 10.

11. The fuel injector (102) of any preceding claim, wherein the outer passage (142) is arranged as a set of segments (608) in annular arrangement.

12. The fuel injector (102) of claim 11, further comprising a set of bridges (610) defined between adjacent segments of the set of segments (608), and wherein the set of bridges (610) connect the first annular structure (136) to the second annular structure (138).

13. The fuel injector (102) of any preceding claim, further comprising a first set of turbulators (190) extending from the first annular structure (136) into the central passage (140).

14. The fuel injector (102) of claim 13, further comprising a second set of turbulators (192) extending from the first annular structure (136) into the outer passage (142).

15. The fuel injector (102) of any preceding claim, wherein a supply of fuel provided from the first fuel supply (150) and the second fuel supply (152) and a supply of air from the first air supply (170) and the second air supply (174) define a fuel to air ratio as a ratio of the supply of fuel to the supply of air, and wherein the fuel to air ratio is greater than or equal to 0.005 and less than or equal to 0.060.
